# EUROPEAN PATENT SPECIFICATION

(11) **EP 3 680 287 B1**
(45) Date of publication and mention of the grant of the patent: **01.10.2025**
(21) Application number: 19150929.8
(22) Date of filing: 09.01.2019
(51) Int. Cl.: C08K 3/22, C08K 3/26, C08K 5/098

(54) **EXTREMELY LOW ODOR STYRENIC POLYMER COMPOSITION**
EXTREM GERUCHSARME STYROLPOLYMERZUSAMMENSETZUNG
COMPOSITION DE POLYMÈRE STYRÉNIQUE À ODEUR EXTRÊMEMENT FAIBLE

(43) Date of publication of application: 15.07.2020
(73) Proprietor: Trinseo Europe GmbH, 8808 Pfaeffikon SZ (CH)
(72) Inventor: Chung, Yao-Chu, Hukou Township 30352 Hsinchu County (TW)
(74) Representative: Hoffmann Eitle

(56) References cited:
- US-A- 3 817 888
- US-A- 5 981 640
- US-B1- 6 297 307
- DATABASE WPI Week 200916, Derwent World Patents Index; AN 2009-B46160, XP002792367
- DATABASE WPI Week 201340, Derwent World Patents Index; AN 2013-G00756, XP002792368

## Description

### TECHNICAL FIELD

The present invention provides acrylonitrile-butadiene-styrene polymer compositions which include a zinc salt. Also, the present invention provides a method of reducing the amount of volatile organic components in an acrylonitrile-butadiene-styrene polymer composition. Further, the present invention provides a method of preparing the acrylonitrile-butadiene-styrene polymer compositions which include a zinc salt.

### BACKGROUND

Polymers prepared from vinylidene-substituted aromatic monomers, such as styrene, are used in a number of polymeric systems, including foams, packaging (food packaging), medical, electronic, optical, appliance and automotive applications. Polymers of vinylidene-substituted aromatic monomers do not exhibit great impact properties and modified polymers containing vinylidene-substituted aromatic monomers have been developed to improve the impact resistance. Such modified polymers may contain butadiene-based rubber, for example, copolymers of styrene and acrylonitrile modified with polybutadiene rubber, commonly referred to as acrylonitrile-butadiene-styrene. Such modified vinylidene-substituted aromatic copolymers are used in many applications such as, for example, automotive interior components.

Vinylidene-substituted aromatic copolymers frequently contain odorous volatile organic components, which makes use in an odor sensitive environment such as automotive interior components problematic. US 6 297 307 B1 discloses low-odor compositions comprising ABS and 0.05-5 %wt of a combination of zinc oxide and/or magnesium oxide and an epoxy compound. Thus, there is a need for vinylidene-substituted aromatic copolymers which have a low amount of total volatile organic components.

### SUMMARY

The polymer compositions of the present invention are defined in the appended claims and include one or more zinc salts. They contain from 0.05 wt% to 2.0 wt% of a zinc salt. The zinc salt is a zinc salt of a fatty acid such as, for example, zinc ricinoleate, zinc stearate, zinc palmitate, zinc laurate and combinations thereof. The fatty acid may contain 20 carbons or greater or 30 carbons or greater. The fatty acid may contain 40 carbons or less.

The present invention also provides a method of reducing the amount of volatile organic components in a acrylonitrile-butadiene-styrene polymer composition as defined in the appended claims. The method includes the step of adding a zinc salt to the acrylonitrile-butadiene-styrene polymer composition. The zinc salt is added in an amount of 0.05 wt% to 2.0 wt%, based on the weight of the composition.

The present invention also provides a method of preparing the acrylonitrile-butadiene-styrene compositions of the present invention as defined in the appended claims. The method includes the steps of mixing pellets of acrylonitrile-butadiene-styrene polymer with a zinc salt and a pigment, feeding the mixture into an extruder, collecting the extrudate and making pellets of the extrudate.

### DETAILED DESCRIPTION

While the present invention has been described in connection with certain embodiments, it is to be understood that the present invention is defined by the appended claims.

One or more as used herein means that at least one, or more than one, of the recited components may be used as disclosed. Residual content of a component refers to the amount of the component present in free form or reacted with another material, such as a polymer. Typically, the residual content of a component can be calculated from the ingredients utilized to prepare the component or composition. Alternatively, it can be determined utilizing known analytical techniques. Heteroatom as used herein means nitrogen, oxygen, and sulfur, more preferred heteroatoms include nitrogen and oxygen with oxygen most preferred. Hydrocarbyl as used herein refers to a group containing one or more carbon atom backbones and hydrogen atoms, which may optionally contain one or more heteroatoms. Where the hydrocarbyl group contains heteroatoms, the heteroatoms may form one or more functional groups well known to one skilled in the art. Hydrocarbyl groups may contain cycloaliphatic, aliphatic, aromatic or any combination of such segments. The aliphatic segments can be straight or branched. The aliphatic and cycloaliphatic segments may include one or more double and/or triple bonds. Included in hydrocarbyl groups are alkyl, alkenyl, alkynyl, aryl, cycloalkyl, cycloalkenyl, alkaryl and aralkyl groups. Cycloaliphatic groups may contain both cyclic portions and noncyclic portions. Hydrocarbylene means a hydrocarbyl group or any of the described subsets having more than one valence, such as alkylene, alkenylene, alkynylene, arylene, cycloalkylene, cycloalkenylene, alkarylene and aralkylene. Valence as used herein means a covalent bond between a hydrocarbyl or hydrocarbylene group and another group such as a carbonyl, oxygen, nitrogen or sulfur containing group or atom, or the referenced base compound. As used herein percent by weight or parts by weight refer to, or are based on, the weight of the compositions unless otherwise specified.

The polymers (copolymers) of the polymer compositions of the present invention contain vinylidene-substituted aromatic monomers, namely styrene. Vinylidene-substituted aromatic monomers comprise vinylidene, i.e. alkenyl groups, bonded directly to aromatic structures. The vinylidene-substituted aromatic monomer, i.e. styrene, may be present in the copolymers in a sufficient amount such that the polymer exhibits the advantageous properties associated with polymers of vinylidene-substituted aromatic monomers, for instance polystyrene. Among the advantageous properties of polymers of vinylidene-substituted monomers include glass transition temperatures of 100 °C or greater, transparency where desired for the use, high heat deflection temperatures, and the like. Among the advantageous properties of polymers of vinylidene-substituted monomers include processability, stiffness, and thermal stability. The copolymers disclosed herein contain vinylidene-substituted aromatic monomers in an amount of 10 percent by weight of the copolymers or greater, 15 percent by weight or greater or 20 percent by weight or greater. The copolymers of one or more vinylidene-substituted aromatic monomers and one or more unsaturated compounds containing a nucleophilic group may contain vinylidene-substituted aromatic monomers in an amount of 85 percent by weight of the copolymers or greater, 90 percent by weight or greater or 95 percent by weight or greater.

The compositions may contain branching agents commonly used in polymers based on vinylidene-substituted aromatic monomers. The branching agents may be vinylidene-substituted aromatic monomers having 2 or more vinylidene groups. Other branching agents may include other difunctional and in general multifunctional (functionality >2) monomers, multifunctional initiators and multifunctional chain transfer agents and the like. The branching agents may be present in the polymerizable compositions in an amount of 0.001 percent by weight of the composition or greater, 0.002 percent by weight or greater or 0.003 percent by weight or greater. The branching agents may be present in the polymerizable compositions in an amount of 0.5 percent by weight of the composition or less, 0.2 percent by weight or less or 0.1 percent by weight or less.

The copolymers disclosed herein may further comprise one or more (meth)acrylates. (Meth) acrylate as used herein refers to compounds having a vinyl group bonded to the carbonyl moiety of an alkyl ester wherein the carbon of the vinyl group bonded to the carbonyl group further has a hydrogen or a methyl group bonded thereto. The term (meth) as used in this context refers to compounds having either of a hydrogen or methyl group on the carbon of the vinyl group bonded to the carbonyl group. (Meth)acrylates useful include those that correspond to the formula: 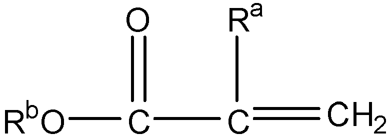 wherein R^{a} is separately in each occurrence H or -CH₃; and R^{b} may be a C ₁ to C-₃₀ alkyl group or C ₁₋₁₀ alkyl group. Examples of the one or more (meth)acrylates include lower alkyl (meth)acrylates, such as methyl (meth)acrylate, ethyl (meth)acrylate, propyl (meth)acrylate, butyl (meth)acrylate, pentyl (meth)(acrylate) and hexyl (meth) acrylate. The one or more (meth)acrylates in the copolymer may be present in sufficient amount to provide the desired properties of the copolymer such as processability, practical toughness, refractive index, environmental stress crack resistance, hydrolytic stability, thermal stability, UV stability, impact resistance, weatherability, and the like. The copolymers disclosed herein contain (meth)acrylates in an amount of 0 percent by weight of the polymerizable compositions or copolymers or greater, 1 percent by weight or greater or 2 percent by weight or greater. The copolymers disclosed herein contain (meth)acrylates in an amount of 20 percent by weight of the polymerizable compositions or copolymers or less, 15 percent by weight or less, 10 percent by weight or less, 8 percent by weight or less or 5 percent by weight or less.

The copolymers further comprise one or more unsaturated nitriles. Unsaturated nitriles include, but are not limited to, acrylonitrile, methacrylonitrile, ethacrylonitrile, fumaronitrile and mixtures thereof. One unsaturated nitrile included in the copolymers is acrylonitrile. The unsaturated nitriles are used in the copolymers to enhance the glass transition temperature, transparency, chemical resistance and the like. The copolymers disclosed herein contain one or more unsaturated nitriles in an amount of 0 percent by weight of the copolymers or greater, 1 percent by weight or greater or 2 percent by weight or greater. The copolymers may contain one or more unsaturated nitriles in an amount of 40 percent by weight of the copolymers or less, 35 percent by weight or less, 30 percent by weight or less or 20 percent by weight or less.

Other vinyl monomers may also be included in the copolymers, in sufficient amount to provide the desired properties as disclosed herein, including conjugated 1,3 dienes (for example butadiene, isoprene, etc.); alpha- or beta-unsaturated monobasic acids and derivatives thereof (for example, acrylic acid, methacrylic acid, etc.); vinyl halides such as vinyl chloride, vinyl bromide; vinylidene chloride, vinylidene bromide; vinyl esters such as vinyl acetate, vinyl propionate, etc.; ethylenically unsaturated dicarboxylic acids and anhydrides and derivatives thereof, such as maleic acid, fumaric acid, maleic anhydride, dialkyl maleates or fumarates, such as dimethyl maleate, diethyl maleate, dibutyl maleate, the corresponding fumarates, N-phenyl maleimide (N-PMI); and the like. These additional comonomers can be incorporated into the composition in several ways including, interpolymerization with the copolymer and/or polymerization into polymeric components which can be combined, for example blended with the copolymer. If present, the amount of such comonomers may be equal to or less than 20 weight percent, equal to or less than 10 weight percent or equal to 5 weight percent based on the total weight of the polymeric composition. Such co-monomers may be present in an amount of 1 percent by weight or greater.

The compositions disclosed may contain impact modifiers. The terms impact modifiers and rubbers are used interchangeably herein. Various impact modifiers may be used in the compositions disclosed; such as diene rubbers, ethylene propylene rubbers, ethylene propylene diene (EPDM) rubbers, ethylene copolymer rubbers, acrylate rubbers, polyisoprene rubbers, silicon rubbers, silicon-acrylate rubbers, polyurethanes, thermoplastic elastomers, halogen containing rubbers, and mixtures thereof. Also suitable are interpolymers of rubber-forming monomers with other copolymerizable monomers. The rubbers may be present in the formulated composition in sufficient amount to provide the desired impact properties to the composition. Desired impact properties include increased izod, charpy, gardner, tensile, falling dart, and the like. The compositions disclosed herein may contain impact modifiers (rubbers) in an amount of 0.5 percent by weight of the compositions or greater, 1 percent by weight or greater, 2 percent by weight or greater or 7 percent by weight or greater. The compositions disclosed herein may contain impact modifiers (rubbers) in an amount of 50 percent by weight of the compositions or less, 45 percent by weight or less, 40 percent by weight or less, 30 percent by weight or less, 20 percent by weight or less or 10 percent by weight or less. The compositions disclosed herein may contain the copolymer in an amount of 0.5 percent by weight of the compositions or greater. The compositions disclosed herein contain copolymer in an amount of 99.5 percent by weight of the compositions or less, 93 percent by weight of the compositions or less, 80 percent by weight of the compositions or less or 50 percent by weight of the compositions or less. Compositions, formulated compositions, as used in this context are the formulated compositions containing all of the ingredients for the intended use.

The rubbers may be diene rubbers such as polybutadiene, polyisoprene, polypiperylene, polychloroprene, and the like or mixtures of diene rubbers, that is, any rubbery polymers of one or more conjugated 1,3-dienes, such as 1,3-butadiene. Such rubbers include homopolymers of 1,3-butadiene and copolymers of 1,3-butadiene with one or more copolymerizable monomers, such as vinylidene-substituted aromatic monomer (styrene). The diene rubber may be the homopolymer of 1,3-butadiene. Exemplary copolymers of 1,3-butadiene are block or tapered block rubbers of at least 30 weight percent 1,3-butadiene, from 50 weight percent, from 70 weight percent, or from 90 weight percent 1,3-butadiene and up to 70 weight percent vinylidene-substituted aromatic monomer, up to 50 weight percent, up to 30 weight percent, or up to 10 weight percent vinylidene-substituted aromatic monomer, weights based on the weight of the 1,3-butadiene copolymer.

The impact modifiers employed may be those polymers and copolymers which exhibit a second order transition temperature, sometimes referred to as the glass transition temperature (Tg), for the diene fragment which is not higher than 0° C or not higher than -20° C. as determined using conventional techniques, for example ASTM Test Method D 746-52 T. Tg is the temperature or temperature range at which a polymeric material shows an abrupt change in its physical properties, including, for example, mechanical strength. Tg can be determined by differential scanning calorimetry (DSC). The diene rubber may have a weight average molecular weight of at least 100 kilograms per mole (kg/mole) or a weight average molecular weight of at least a 300 kg/mole. The diene rubber may have a weight-average molecular weight equal to or less than 900 kg/mole or a weight average molecular weight equal to or less than 600 kg/mole. The diene rubber having a solution viscosity of at least 10 centiStokes (cSt) (10 percent (%) solution in styrene) or a solution viscosity of 30 cSt. The diene rubber may have a solution viscosity equal to or less than 500 cSt or equal to or less than 400 cSt. The rubber, with graft and/or occluded polymers if present, is dispersed in the continuous matrix phase as discrete particles.

The rubber particles may comprise a range of sizes having a mono-modal, bimodal, or multimodal distribution. The average particle size of a rubber particle, as used herein, will, refer to the volume average diameter. In most cases, the volume average diameter of a group of particles is the same as the weight average. The average particle diameter measurement generally includes the polymer grafted to the rubber particles and occlusions of polymer within the particles. Unless otherwise specified, the rubber particle sizes disclosed and claimed herein are determined on a Coulter Multisizer II or II e with the ACCUCOMP^{™} Software Version 2.01 by the following method: about 3 granules of polymer samples (30-70 mg) are dissolved in 5 milliliters (ml) of Dimethyl Formamide (DMF), using an ultrasonic bath for agitation for approximately 15 to 20 minutes. 10 ml or an electrolyte solution (1 percent of NH₄SCN in DMF) is mixed with 0.2 ml of the sample solution. The coulter measuring stand is used with 20 micrometer Coulter tube and a 1.16 micrometer calibration material. The coincidence level indicator of the apparatus should read between 5 and 10 percent. If the reading is above 10 percent, dilute the sample in a beaker with electrolyte solution, or if it is too low, add more drops of the polymer solution in DMF. The volumetric mean particle size is reported. The average particle size of the rubber particles may be equal to or greater than 0.05 micrometers (microns) (µm), equal to or greater than 0.1 micrometers, and 0.6 micrometers. The average particle size of the rubber particles may be equal to or less than 10 micrometers, equal to or less than 5 micrometers, or equal to or less than 2 micrometers.

The compositions of the present invention may also optionally contain one or more additives that are commonly used in compositions of this type. Exemplary additives include: ignition resistant additives, stabilizers, colorants (e.g., pigments, carbon black, TiO₂, etc.), antioxidants (e.g., IRGANOX 1076 or IRGAFOS 178), adsorbers (e.g., zeolites, activated carbon, bamboo charcoal, etc.) antistats, silicon oils, flow enhancers, mold releases, etc. Exemplary ignition resistance additives include halogenated hydrocarbons, halogenated carbonate oligomers, halogenated diglycidyl ethers, organophosphorous compounds, fluorinated olefins, antimony oxide and metal salts of aromatic sulfur, or a mixture thereof may be used. Compounds which stabilize mass polymerized rubber-modified vinylidene-substituted aromatic copolymer compositions against degradation caused by, but not limited to heat, light, and oxygen, or a mixture thereof may be used. Fillers and reinforcements may also be present. Exemplary fillers include talc, clay, wollastonite, mica, glass or a mixture thereof. Some of these additives may adsorb volatile organic compounds, such as, for example, zeolites, activated carbon, bamboo charcoal, etc.

If used, such additives and/or fillers and/or adsorbents may be present in the formulated compositions in an amount 0.01 percent by weight or greater, 0.1 percent by weight or greater, 1 percent by weight or greater, 2 percent by weight or greater, or 3 percent by weight or greater based on the weight of the compositions. The additives and/or fillers may be present in an amount of 40 percent by weight or less, 30 percent by weight or less, 20 percent by weight or less, 15 percent by weight or less, 10 percent by weight or less, 5 percent by weight or less based on the weight of the composition. The additives and adsorbents may be independently present in amounts up to 5 weight percent while fillers may be present in amounts up to 40 weight percent based on the weight of the compositions.

The copolymers used in the present invention include acrylonitrile, butadiene and styrene monomers in various proportions. The acrylonitrile-butadiene-styrene polymers may contain styrene monomer in a concentration of 50 percent by weight or more, 65 percent by weight or more, 70 percent by weight or more, butadiene monomer in a concentration of 6 percent by weight or more, 9 percent by weight or more, 12 percent by weight or more, 15 percent by weight or more, acrylonitrile monomer in a concentration of 10 percent by weight or more, 20 percent by weight or more, 30 percent by weight or more. The acrylonitrile-butadiene-styrene polymers may contain styrene monomer at a concentration of 55 percent by weight or less, 60 percent by weight or less or 75 percent by weight or less, butadiene monomer at a concentration of 8 percent by weight or less, 13 percent by weight or less or 18 percent by weight or less, acrylonitrile monomer at a concentration of 15 percent by weight or less, 25 percent by weight or less, 35 percent by weight or less. The acrylonitrile-butadiene-styrene polymers may contain styrene monomer at a concentration of 60 percent by weight, butadiene monomer at a concentration of 12 percent by weight or less and acrylonitrile monomer at a concentration of 23 percent. The acrylonitrile-butadiene-styrene polymers may be analyzed by several different methods including, for example, FTIR (i.e., Fourier transform infrared spectroscopy), which may be used characterize peaks of functional groups of acrylonitrile, styrene, and butadiene rubber, PGC-MS (i.e., pyrolysis gas chromatography-mass spectroscopy) and EG-MS (i.e., thermal evolved gas analyzer-mass spectroscopy).

The polymers may optionally include acrylate comonomer and/or maleimide comonomer. The comonomer may be n-butyl acrylate or N-phenyl maleimide or combinations thereof. The n-butyl acrylate may be present in an amount of less than 10 wt%, while the N-phenyl maleimide may be present in an amount of less than 5 wt%.

The polymer compositions of the present invention include a zinc salt. The compositions contain from 0.05 wt% to 2.0 wt% of a zinc salt. The zinc salt is the zinc salt of a fatty acid such as, for example, zinc ricinoleate, zinc stearate, zinc palmitate, and zinc laurate or combinations thereof. The fatty acid may contain 20 carbons or greater or 30 carbons or greater. The fatty acid may contain 40 carbons or less.

The polymer compositions contain one or more zinc salts in a concentration sufficient to reduce the amount of volatile organic compounds in the copolymers. The compositions contain one or more zinc salts in a concentration of 0.05 percent by weight or more, 0.1 percent by weight or more, 0.5 percent by weight or more or 1 percent by weight or more. The compositions contain a zinc salt at a concentration of 2.0 percent by weight or less or 1.5 percent by weight or less. The zinc salt may be zinc ricinoleate and the copolymer is an acrylonitrile-butadiene-styrene copolymer, which may optionally include n-butyl acrylate and/or N-phenyl maleimide.

The polymer composition contains volatile organic components at an amount of less than 30 µg/g, less than 20 µg/g or less than 10 µg/g. They may contain volatile organic components at an amount of greater than 25 µg/g, greater than 15 µg/g, or greater than 10 µg/g. The volatile organic compounds are measured by the methods described in the Examples..

The copolymers compositions contain styrene at an amount of less than 300 ppm (residual styrene), less than 200 ppm, less than 175 ppm or less than 160 ppm. They contain residual styrene at an amount of greater than 50 ppm, greater than 100 ppm, greater than 125 ppm or greater than 140 ppm.

Various techniques for producing the copolymers are disclosed. Examples of these known polymerization processes include bulk, mass-solution, or mass-suspension polymerization, generally known as mass polymerization processes. For a good discussion of how to make monovinylidene aromatic copolymer containing compositions see "Modern Styrenic Polymers" of Series In Polymer Science (Wiley), Ed. John Scheirs and Duane Priddy, ISBN 0 471 497525. Also, for example, U.S. Pat. Nos. 3,660,535; 3,243,481; and 4,239,863. Continuous mass polymerization techniques are advantageously employed in preparing the copolymers. The polymerization may conducted in one or more substantially linear, stratified flow or so-called "plug-flow" type reactors such as described in U.S. Pat. No. 2,727,884, sometimes referred to as multizone plug flow bulk process, which may or may not comprise recirculation of a portion of the partially polymerized product or, alternatively, in a stirred tank reactor wherein the contents of the reactor are essentially uniform throughout, which is generally employed in combination with one or more plug-flow type reactors. The stirred tank reactors can be boiling and/or coil reactors. Such reactors can be used in series. Processes for use of the stirred tank reactors for preparing copolymers are disclosed in Modern Styrenic Polymers, Edited by John Schiers and Duane Priddy, Wiley, ISBN 0 471 49752 5, published in 2003, see pp 43-72. Alternatively, a parallel reactor set-up, as taught in EP 412801, may also be suitable for preparing the copolymers.

Multizone plug flow bulk processes include a series of polymerization vessels (or towers), consecutively connected to each other, providing multiple reaction zones. A mixture of monomers used to prepare the copolymer is formed and then fed into the reaction system. A rubber, for example butadiene rubber may be dissolved in the mixture monomers before being fed into the reaction system. The polymerization can be thermally or chemically initiated, and viscosity of the reaction mixture will gradually increase. During the reaction course, where present, the rubber may become grafted with the copolymer and, in the rubber solution, bulk copolymer (referred to also as free copolymer or matrix copolymer or non-grafted copolymer) is also formed. At a point where the free copolymer cannot be "held" in one single, continuous "phase" of rubber solution, it begins to form domains of copolymer dissolved in monomer and solvent. The polymerization mixture now is a two-phase system. As polymerization proceeds, more and more free copolymer is formed, and the rubber phase starts to disperse itself (rubber domains) in the matrix of the ever-growing free copolymer phase. Eventually, the free copolymer becomes a continuous phase. Some copolymer is occluded inside the rubber particles as well. Pre-phase inversion means that the rubber solution is a continuous phase and that no rubber particles are formed, and post phase inversion means that substantially all the rubber phase has converted to rubber domains and there is a continuous copolymer phase. Following the phase inversion, more matrix copolymer may be formed

A feed with a functional monomer such as N-phenyl maleimide that increases the Tg of the matrix and also the heat resistance of the product can be added in one or more location throughout the polymerization process, the location(s) may be the same or different from where the co-monomers are added, for example, see U.S. Pat. Nos. 5,412,036 and 5,446,103.

A feed with a functional additive such as ethylene-bisstearamide, dialkyladipates, polydimethylsiloxane, or other lubricants or release agents that increases the processability of the product can be added in one or more location throughout the polymerization, devolatization and conveying process, the location(s) may be the same or different from where the co-monomers are added.

When a desirable monomer conversion level and a matrix copolymer of desired molecular weight distribution is obtained, where rubber is present, the polymerization mixture may then be subjected to conditions sufficient to cross-link the rubber and remove any unreacted monomer and solvent. Such cross-linking and removal of unreacted monomer, as well as removal of diluent or solvent, if employed, and other volatile materials is advantageously conducted employing conventional devolatilization techniques, such as introducing the polymerization mixture into a devolatilizing chamber, flashing off the monomer and other volatiles at elevated temperatures, for example, from 130° C to 300° C. and/or under vacuum and removing them from the chamber. Thereafter the polymer may be extruded, and bulk pellets obtained from a pelletizer.

The temperatures at which polymerization is conducted are dependent on a variety of factors including the specific initiator and type and concentration of rubber, comonomers, reactor set-up (for example, linear, parallel, recirculation, etc.), and reaction solvent, if any, employed. Polymerization temperatures from 60° C to 160° C may be employed prior to phase inversion with temperatures from 100° C to 200° C. being employed subsequent to phase inversion. Mass polymerization at such elevated temperatures is continued until the desired conversion of monomers to polymer is obtained. Generally, conversion (also sometimes referred to as percent solids) of from 55 to 90, or 60 to 85, weight percent of the monomers added to the polymerization system (that is, monomers added in the feed and any additional stream, including any recycle stream) to polymer is desired. Percent solids is the ratio of the weight of the solids (for example, rubber plus matrix (co)polymer) to the weight of the reaction mixture (for example, unpolymerized monomer(s)) expressed in percent at any specified time during the polymerization reaction.

To synthesize rubber-modified copolymers with high performance by the mass process, four aspects are important among many others. These aspects are grafting of the rubber substrate prior to phase inversion, rubbery domain and/or particle formation or sizing during phase inversion, building molecular weight and molecular weight distribution of the matrix, and cross-linking of the rubber particle at the completion point of the mass polymerization. Alternatively, a combination of mass and suspension polymerization techniques are employed. Using these techniques, following phase inversion and subsequent size stabilization of the rubber particles, the partially polymerized product can be suspended with or without additional monomers in an aqueous medium which contains a polymerized initiator and polymerization subsequently completed. The rubber-modified copolymer is subsequently separated from the aqueous medium by acidification, centrifugation or filtration. The recovered product is then washed with water and dried.

A polymer's molecular weight is directly related to the entanglement effects contributing to its rheological and physical properties. The molecular weight of the matrix copolymer produced in the grafting reactor during the production of the rubber-modified vinylidene-substituted aromatic copolymer can be adjusted by the addition of a suitable chain transfer agent. Chain transfer agents, or molecular weight regulators, are substances which can undergo atom or group transfer or an addition-elimination. Organic molecules with labile hydrogens and are well known, for example, alpha-methyl styrene dimer, mercaptans or thiols such as n-dodecylmercaptan (nDM) and thioglycolate, disulfides, dithiauram disulfides, monosulfides, halides or halocarbons, common solvents and certain unsaturated compounds such as allyl peroxides, allyl halides, allyl sulfides, and terpenes such as terpinoline. Also transition metal complexes as cobalt(II) porphyrin complexes can be used as transfer agent. Chain transfer agents are added in an amount from 0.0001 to 10 weight percent based on the weight of the reaction mixture (that is, rubber, monomer(s), and solvent, if any). The chain transfer agent may be added in an amount equal to or greater than 0.001 weight percent, 0.002, or 0.003 weight percent based on the weight of the reaction mixture. The chain transfer agent may be added in an amount equal to or less than 0.5 weight percent, 0.2, or 0.1 weight percent based on the weight of the reaction mixture.

The chain transfer agent may be added all at once in one reactor zone or it may be added in two or more reactor zones. Chain transfer agent may be added before phase inversion, during rubber particle sizing, more may be added after particle sizing to help control the matrix molecular weight, and optionally more may be added later to fine tune the matrix molecular weight/molecular weight distribution. The chain transfer agent may be added at the beginning of the polymerization (in other words, at a time where the percent solids for the reaction mixture is equal to the weight percent rubber) in a first amount equal to or greater than 0.001 weight percent, from 0.002 and 0.1 weight percent, or from 0.003 and 0.05 weight percent based on the weight of the reaction mixture. The amount of chain transfer agent added later, for example after 40 percent solids, 30 percent solids, is added in a second amount equal to or less than 0.7 weight percent, 0.001 to 0.6 weight percent, or from 0.002 to 0.5 weight percent based on the weight of the reaction mixture. The molecular weight of the matrix copolymer depends on, among other things, how much chain transfer agent is used and when it is added.

The present invention also provides a method of reducing the amount of volatile organic compounds in an acrylonitrile-butadiene-styrene polymer composition. The method includes the step of adding from 0.05 wt% to 2.0 wt% of a zinc salt to the polymer composition..

The present invention also provides a method of preparing the polymer composition of the present invention. The method includes the step of mixing pellets of acrylonitrile-butadiene-styrene polymer with a zinc salt and a pigment and, optionally, an adsorbent from 0% to 5%, feeding the mixture into an extruder, which may be an intermeshing co-rotating twin screw extruder, collecting the extrudate and making pellets of the extrudate. The barrel of the extruder may be from 210 °C to 240 °C and the rate of screw rotation may be from 250 rpm to 350 rpm.

The polymer compositions of the present invention can be used to prepare articles. Such articles may be fabricated in any known manner commonly used with acrylonitrile-butadiene-styrene polymers. The articles may be fabricated by molding, extrusion, thermoforming, foaming, blow molding, injection molding, extrusion blow molding and combinations thereof. The articles may be molded, extruded, extruded and molded, and the like. The articles may exhibit glass transition temperatures of 100 ° C or greater. The articles may be transparent or opaque.

### Illustrative Examples

The following examples are provided to illustrate the invention but are not intended to limit the scope thereof. All parts and percentages are by weight unless otherwise indicated.

### Example 1: Preparation of Mass Produced Acrylonitrile-Butadiene-Styrene Copolymer

The copolymer is prepared using the procedure described in Shields et al., International Publication No. WO2007047120A2. The resin for samples 1 to 6, *infra,* are mass produced acrylonitrile butadiene styrene terpolymer resins where 10.2 weight percent rubber is dissolved in 53.3 weight percent styrene, 17.5 weight percent acrylonitrile, 19 weight percent ethylbenzene, and optionally N-phenyl maleimide to form a reaction feed stream. The mixture is polymerized in continuous process with agitation. The polymerization occurs in a multi-staged reactor system with an increasing temperature profile. During the polymerization process, some of the copolymer grafts to the rubber molecules while some forms the matrix copolymer.

A continuous polymerization apparatus composed of four plug flow reactors connected in series, wherein each plug flow reactor is divided in three zones of equal size, each zone having a separate temperature control and equipped with an agitator, is continuously charged in zone I with a feed of 17 .8 g/hr composed of a rubber component, styrene, acrylonitrile, and ethyl benzene, at such a rate that the total residence time in the apparatus is approximately 7 hours. 1 , 1-di(t-butyl peroxy) cyclohexane (TRIGONOX^{™} 22 initiator) is added to the feed line to the first reactor, n-dodecylmercaptan (nDM) (chain transfer agent) is added to different zones to optimize the rubber particle sizing and the matrix molecular weight. After passing through the four reactors, the polymerization mixture is guided to a separation and monomer recovery step using a preheater followed by a devolatilizer. The molten resin is stranded and cut in granular pellets. The monomers and ethyl benzene are recycled and fed to the polymerization apparatus.

Temperatures for (a) the four reactors are: reactor 1 : (Zone 1 , 108°C), (Zone 2, I10°C), and (Zone 3, 114 °C); reactor 2: (Zone 4, 117° C), (Zone 5, 1I9°C), and (Zone 6 121 °C); reactor 3: (Zone 7, 124°C), (Zone 8, 131 °C), and (Zone 9, 141 °C), and reactor 4:(Zone 10, 152° C), (Zone 1 1, 162°C), and (Zone 12, 173°C). Agitation is set for each of the reactors at 100, 1 10, 50, and 10 revolutions per minute (RPM) for reactors 1 to 4, respectively. Samples are tested at the end of each reactor to determine percent conversion and are expressed as percent solids based on the weight of the reaction mixture. The pellets of copolymer are used to prepare low odor formulation by twin-screw compounding process.

### Example 2: Preparation of Mass Produced Acrylonitrile-Butadiene-Styrene Copolymer Compounded with Zinc Ricinoleate

The pellets of acrylonitrile butadiene styrene prepared in Example 1 are dry mixed with zinc ricinoleate in a mixer. The dry blended mixture is fed to a 40 mm CPM CX 40 fully intermeshing co-rotating twin screw extruder. The following are the compounding conditions in the extruder: Barrel temperature profile: 210°C, 220°C, 220°C, 230°C, and 240°C and screw speed of 300 rotations per minute (RPM). The extrudate strand is cooled in water bath and then pellets are formed. The pellet product is analyzed by VDA-277 and VDA-270 described in Examples 3 and 4, respectively.

### Example 3: Testing Procedure VDA-277

Approximately 2 grams of pellet prepared in Example 2 is weighed in a 25 mL headspace vial and is statically equilibrated at 120 °C for 5 hours (using helium as carrier gas), analyses were performed in triplicate. Quantification is based on external calibration via acetone. The method uses a headspace gas chromatography with FID as a detector. Quantification data is obtained via a summation of the areas of all peaks being compared versus the area of toluene external standard.

### Example 4: Testing Procedure VDA-270

A 1 or 3 liter glass testing cup with unscented sealing and lid; the cup, the sealing and the lid is cleaned before use was employed in the testing procedure. The specimen quantity is specified in three steps as described in table below. The assignment to variants A/B/C is made according to the proportional quantity of material used in the vehicle interior. Variant B, which uses a 20 g pellet sample in a 1-litre-vessel is employed in Example 5. The vessel is closed and stored in the pre-heated thermal chamber.

| | | Quantity for | |
|---|---|---|---|
| **Variant** | **Application** | **1-litre-vessel** | **3-litre-vessel** |
| A | Clips, stoppers,spouts and other small parts | (10 ±1) g )¹ | (30 ± 3) g |
| B | Arm rests, ash trays, straps, gear shift lever bellows, sun shields and other components of medium size | (20 ± 2) g | (60 ± 6) cm³ |
| C | Covering and insulating materials, films, leather, foamed materials, carpets and other materials with large surfaces | (50 ±5) cm³ respectively (200 ± 20) cm² )² | (150 ± 15) cm³ |

| | | | |
|---|---|---|---|
| )¹ when the total amount of the sample (the part) in the vehicle is less than 10g, then this is the maximum amount used for the test. )² for large area materials with a thickness < 3 mm | | | |

Three storage conditions are available in the table below. Variant 3, i.e. heating the sample at 80 °C for 2 hours is used in Example 5.

| **Variant** | **Temperature** | **Storage duration** |
|---|---|---|
| 1 | (23 ± 2) °C | (24 ± 1) h |
| 2 | (40 ± 2) °C | (24 ± 1) h |
| 3 | (80 ± 2) °C | 2 h ± 10 min |

To begin the odor level evaluation, the test vessel is removed from the thermal chamber and is cooled down to a test temperature of 60 °C prior to the evaluation. Approval tests are made by at least three testers. For odor testing the cover of the test vessel is lifted as little as possible for minimizing the air exchange with the environment. The odor evaluation is made for the variant B, using a grading system from 1 to 6, half-steps being allowed. The odor rating according to the scale described below is indicated as an arithmetic mean of the individual grades, the value being rounded down to half-step grades, with indication of the test method and the variant used.

### Evaluation scale:

| | |
|---|---|
| Grade 1 | not perceptible |
| Grade 2 | perceptible, not disturbing |
| Grade 3 | clearly perceptible, but not disturbing |
| Grade 4 | disturbing |
| Grade 5 | strongly disturbing |
| Grade 6 | not acceptable |

### Example 5: Testing of Mass Produced Acrylonitrile-Butadiene-Styrene Copolymer Compounded with Zinc Ricinoleate for Odor and Total Volatile Organic Compounds

Mass produced acrylonitrile-butadiene-styrene copolymer is made as described in Example 1 and has about 12.5 wt% polybutadiene content at in the copolymer, as measured by Fourier Transform infrared spectroscopy, about 23.5 wt% acrylonitrile content in the copolymer, as measured by Fourier Transform infrared spectroscopy, about 3.4 wt% N-phenyl maleimide content in the copolymer, as measured by Fourier Transform infrared spectroscopy, gas an average rubber particle size at 1.0 micron, as determined on a Coulter Multisizer II with the ACCUCOMP^{™} software ver. 2.01 and has a weight average molecular weight (Mw) at about 146 kg/mole for the matrix copolymer, as measured by gel permeation chromatography (GPC) using narrow molecular weight polystyrene standards, determinations and a refractive index (RI) detector. Zinc ricinoleate is purchased from Evonik, grade name TEGO SORB PY88. The results are shown in the table below.

| | Comp. Example | Example | | | | |
|---|---|---|---|---|---|---|
| Composition | 1 | 2 | 3 | 4 | 5 | 6 |
| MASS ABS wt% | 100 | 99.9 | 99.7 | 99.9 | 99.5 | 99.0 |
| Zinc ricinoleate wt% | | | | 0.1 | 0.5 | 1 |
| Zinc stearate wt% | | 0.1 | 0.3 | | | |
| TVOC by VDA277 (µg/g) | 20.6 | 19.9 | 18.4 | 14.4 | 15.8 | 19.9 |
| Odor rating by VDA270 | 4.0 | 3.5 | 3.5 | 2.5 | 2.0 | 3.0 |

## Claims

1. An acrylonitrile-butadiene-styrene polymer composition including from 0.05 wt% to 2.0 wt% of a zinc salt based on the weight of the composition and a pigment, wherein the zinc salt is a zinc salt of a fatty acid, the amount of residual styrene is between 50 and 300 ppm and the amount of volatile organic compound is less than 30 µg/g, wherein the amount of volatile organic compound is determined as defined in the description.

2. The polymer composition of claim 1, wherein the zinc salt of a fatty acid is selected from zinc ricinoleate, zinc stearate, zinc palmitate, zinc laurate and combinations thereof.

3. The polymer composition of claim 1, wherein the pigment is carbon black.

4. The acrylonitrile-butadiene-styrene polymer composition of claims 1-3, wherein the concentration of acrylonitrile in the polymer is from 5 wt% to 40 wt%, the concentration of butadiene in the polymer is from 5 wt% to 35 wt% and the concentration of styrene in the polymer is from 25 wt% to 90 wt%.

5. The acrylonitrile-butadiene-styrene polymer composition of claims 1-4, wherein the concentration of acrylonitrile in the polymer is 23 wt%, the concentration of butadiene in the polymer is 12 wt% and the concentration of styrene in the polymer is 60 wt%.

6. The acrylonitrile-butadiene-styrene polymer composition of claims 1-5 further comprising in the polymer a comonomer selected from n-butyl acrylate, N-phenyl maleimide and combinations thereof.

7. The acrylonitrile-butadiene-styrene polymer composition of claim 6, wherein the concentration of n-butyl acrylate in the polymer is from 0 wt% to 10 wt% and the concentration of N-phenyl maleimide in the polymer is from 0 wt% to 5 wt%.

8. The acrylonitrile-butadiene-styrene polymer composition of claims 1-7, wherein the amount of volatile organic compounds is less than 20 µg/g.

9. The acrylonitrile-butadiene-styrene polymer composition of claims 1-8, further comprising a zeolite, activated carbon or bamboo charcoal.

10. A method of reducing the amount of volatile organic compounds in an acrylonitrile-butadiene-styrene polymer composition, the method comprising adding from 0.05 wt% to 2.0 wt% of a zinc salt to the acrylonitrile-butadiene-styrene polymer composition based on the weight of the composition, wherein the amount of residual styrene in the acrylonitrile-butadiene-styrene polymer composition is between 50 and 300 ppm and the amount of volatile organic compound is less than 100 µg/g, wherein the amount of volatile organic compound is determined as defined in the description.

11. The method of claim 10, wherein the zinc salt is a zinc salt of a fatty acid.

12. A method of preparing the acrylonitrile-butadiene-styrene polymer composition of claim 1 comprising:
mixing pellets of acrylonitrile-butadiene-styrene polymer with a zinc salt and a pigment;
feeding the mixture into an extruder;
collecting the extrudate; and
making pellets of the extrudate
wherein the zinc salt is a zinc salt of a fatty acid.

13. The method of claim 12, wherein the pigment is carbon black.

14. The method of claim 12 or 13, wherein the pellets are further mixed with a zeolite, activated carbon, or bamboo charcoal.

15. The method of claims 12-14, wherein the zinc salt of a fatty acid is selected from zinc ricinoleate, zinc stearate, zinc palmitate, zinc laurate and combinations thereof.

## Patentansprüche

1. Acrylnitril-Butadien-Styrol-Polymerzusammensetzung, die 0,05 Gew.-% bis 2,0 Gew.-% eines Zinksalzes, bezogen auf das Gewicht der Zusammensetzung, und ein Pigment einschließt, wobei das Zinksalz ein Zinksalz einer Fettsäure ist, die Menge des Reststyrols zwischen 50 und 300 ppm beträgt und die Menge flüchtiger organischer Verbindungen weniger als 30 µg/g beträgt, wobei die Menge flüchtiger organischer Verbindungen so wie in der Beschreibung definiert bestimmt wird.

2. Polymerzusammensetzung nach Anspruch 1, wobei das Zinksalz einer Fettsäure aus Zinkricinoleat, Zinkstearat, Zinkpalmitat, Zinklaurat und Kombinationen davon ausgewählt ist.

3. Polymerzusammensetzung nach Anspruch 1, wobei das Pigment Ruß ist.

4. Acrylnitril-Butadien-Styrol-Polymerzusammensetzung nach den Ansprüchen 1-3, wobei die Konzentration von Acrylnitril in dem Polymer 5 Gew.-% bis 40 Gew.-% beträgt, die Konzentration von Butadien in dem Polymer 5 Gew.-% bis 35 Gew.-% beträgt und die Konzentration von Styrol in dem Polymer 25 Gew.-% bis 90 Gew.-% beträgt.

5. Acrylnitril-Butadien-Styrol-Polymerzusammensetzung nach den Ansprüchen 1-4, wobei die Konzentration von Acrylnitril in dem Polymer 23 Gew.-% beträgt, die Konzentration von Butadien in dem Polymer 12 Gew.-% beträgt und die Konzentration von Styrol in dem Polymer 60 Gew.-% beträgt.

6. Acrylnitril-Butadien-Styrol-Polymerzusammensetzung nach den Ansprüchen 1-5, die in dem Polymer ferner ein Comonomer, ausgewählt aus n-Butylacrylat, N-Phenylmaleimid und Kombinationen davon, umfasst.

7. Acrylnitril-Butadien-Styrol-Polymerzusammensetzung nach Anspruch 6, wobei die Konzentration von n-Butylacrylat in dem Polymer 0 Gew.-% bis 10 Gew.-% beträgt und die Konzentration von N-Phenylmaleimid in dem Polymer 0 Gew.-% bis 5 Gew.-% beträgt.

8. Acrylnitril-Butadien-Styrol-Polymerzusammensetzung nach den Ansprüchen 1-7, wobei die Menge an flüchtigen organischen Verbindungen weniger als 20 µg/g beträgt.

9. Acrylnitril-Butadien-Styrol-Polymerzusammensetzung nach den Ansprüchen 1-8, ferner umfassend ein Zeolith, Aktivkohle oder Bambuskohle.

10. Verfahren zur Reduzierung der Menge an flüchten organischen Verbindungen in einer Acrylnitril-Butadien-Styrol-Polymerzusammensetzung, wobei das Verfahren das Hinzufügen von 0,05 Gew.-% bis 2,0 Gew.-% eines Zinksalzes zu der Acrylnitril-Butadien-Styrol-Polymerzusammensetzung, bezogen auf das Gewicht der Zusammensetzung, umfasst, wobei die Menge des Reststyrols in der Acrylnitril-Butadien-Styrol-Polymerzusammensetzung zwischen 50 und 300 ppm beträgt und die Menge an flüchten organischen Verbindungen weniger als 100 µg/g beträgt, wobei die Menge an flüchten organischen Verbindungen so wie in der Beschreibung definiert bestimmt wird.

11. Verfahren nach Anspruch 10, wobei das Zinksalz ein Salz einer Fettsäure ist.

12. Verfahren zur Herstellung der Acrylnitril-Butadien-Styrol-Polymerzusammensetzung nach Anspruch 1, umfassend:
Mischen von Acrylnitril-Butadien-Styrol-Polymerpellets mit einem Zinksalz und einem Pigment,
Einführen der Mischung in einen Extruder,
Sammeln des Extrudats und
Herstellen von Pellets aus dem Extrudat,
wobei das Zinksalz ein Zinksalz einer Fettsäure ist.

13. Verfahren nach Anspruch 12, wobei das Pigment Ruß ist.

14. Verfahren nach Anspruch 12 oder 13, wobei die Pellets ferner mit einem Zeolith, Aktivkohle oder Bambuskohle gemischt werden.

15. Verfahren nach den Ansprüchen 12-14, wobei das Zinksalz einer Fettsäure aus Zinkricinoleat, Zinkstearat, Zinkpalmitat, Zinklaurat und Kombinationen davon ausgewählt ist.

## Revendications

1. Composition de polymère d'acrylonitrile-butadiène-styrène incluant de 0,05 % en poids à 2,0 % en poids d'un sel de zinc sur la base du poids de la composition et un pigment, dans laquelle le sel de zinc est un sel de zinc d'un acide gras, la quantité de styrène résiduel se situe entre 50 et 300 ppm et la quantité de composé organique volatil est inférieure à 30 µg/g, dans laquelle la quantité de composé organique volatil est déterminée comme défini dans la description.

2. Composition de polymère selon la revendication 1, dans laquelle le sel de zinc d'un acide gras est sélectionné à partir du ricinoléate de zinc, du stéarate de zinc, du palmitate de zinc, du laurate de zinc et de combinaisons de ceux-ci.

3. Composition de polymère selon la revendication 1, dans laquelle le pigment est le noir de carbone.

4. Composition de polymère d'acrylonitrile-butadiène-styrène selon les revendications 1 à 3, dans laquelle la concentration d'acrylonitrile dans le polymère est de 5 % en poids à 40 % en poids, la concentration de butadiène dans le polymère est de 5 % en poids à 35 % en poids et la concentration de styrène dans le polymère est de 25 % en poids à 90 % en poids.

5. Composition de polymère d'acrylonitrile-butadiène-styrène selon les revendications 1 à **4,** dans laquelle la concentration d'acrylonitrile dans le polymère est de 23 % en poids, la concentration de butadiène dans le polymère est de 12 % en poids et la concentration de styrène dans le polymère est de 60 % en poids.

6. Composition de polymère d'acrylonitrile-butadiène-styrène selon les revendications 1 à 5 comprenant en outre dans le polymère un monomère sélectionné à partir de l'acrylate de n-butyle, du maléimide de N-phényle et de compositions de ceux-ci.

7. Composition de polymère d'acrylonitrile-butadiène-styrène selon la revendication 6, dans laquelle la concentration d'acrylate de n-butyle dans le polymère est de 0 % en poids à 10 % en poids et la concentration de maléimide de N-phényle dans le polymère est de 0 % en poids à 5 % en poids.

8. Composition de polymère d'acrylonitrile-butadiène-styrène selon les revendications 1 à 7, dans laquelle la quantité de composés organiques volatils est inférieure à 20 µg/g.

9. Composition de polymère d'acrylonitrile-butadiène-styrène selon les revendications 1 à 8, comprenant en outre une zéolithe, du carbone activé ou du charbon de bambou.

10. Procédé de réduction de la quantité de composés organiques volatils dans une composition de polymère d'acrylonitrile-butadiène-styrène, le procédé comprenant un ajout de 0,05 % en poids à 2,0 % en poids d'un sel de zinc à la composition de polymère d'acrylonitrile-butadiène-styrène sur la base du poids de la composition, dans lequel la quantité de styrène résiduel dans la composition de polymère d'acrylonitrile-butadiène-styrène se situe entre 50 et 300 ppm et la quantité de composé organique volatil est inférieure à 100 µg/g. dans lequel la quantité de composé organique volatil est déterminée comme défini dans la description.

11. Procédé selon la revendication 10, dans lequel le sel de zinc est un sel de zinc d'un acide gras.

12. Procédé de préparation de la composition de polymère d'acrylonitrile-butadiène-styrène selon la revendication 1 comprenant :
un mélange de granulés de polymère d'acrylonitrile-butadiène-styrène avec un sel de zinc et un pigment ;
une introduction du mélange dans une extrudeuse ;
une collecte de l'extrudat ; et
une fabrication de granulés de l'extrudat
dans lequel le sel de zinc est un sel de zinc d'un acide gras.

13. Procédé selon la revendication 12, dans lequel le pigment est le noir de carbone.

14. Procédé selon la revendication 12 ou la revendication 13, dans lequel les granulés sont en outre mélangés avec une zéolithe, du carbone activé ou du charbon de bambou.

15. Procédé selon les revendications 12 à 14, dans lequel le sel de zinc d'un acide gras est sélectionné à partir du ricinoléate de zinc, du stéarate de zinc, du palmitate de zinc, du laurate de zinc et de combinaisons de ceux-ci.
